Europäisches Patentamt

European Patent Office

Office européen des brevets

(11) Veröffentlichungsnummer: **0 455 103 A2**

## (12) EUROPÄISCHE PATENTANMELDUNG

(21) Anmeldenummer: 91106501.9

(22) Anmeldetag: 23.04.91

(51) Int. Cl.5: **C09B 1/20, C09B 3/32, C09B 5/58, //C09B3/00, C09B5/00**

(30) Priorität: 02.05.90 DE 4014172

(43) Veröffentlichungstag der Anmeldung:
06.11.91 Patentblatt 91/45

(84) Benannte Vertragsstaaten:
CH DE ES FR GB LI

(71) Anmelder: **BASF Aktiengesellschaft
Carl-Bosch-Strasse 38
W-6700 Ludwigshafen(DE)**

(72) Erfinder: **Hoch, Helmut, Dr.
Am Wingertsberg 14
W-6719 Weisenheim(DE)**
Erfinder: **Kowarsch, Heinrich, Dr.
Kuernbacher Strasse 34
W-7519 Obererdingen(DE)**

(54) Verfahren zur Halogenierung von polycyclischen Verbindungen.

(57) Verfahren zur Halogenierung von polycyclischen Küpenfarbstoffen oder deren polycyclischen Vorprodukten mit Chlor oder Brom als Halogenierungsmittel in Gegenwart eines Verdünnungsmittels bei einer Temperatur von 123 bis 200°C, wobei man geschmolzene Benzoesäure als Verdünnungsmittel verwendet.

EP 0 455 103 A2

Die vorliegende Erfindung betrifft ein neues Verfahren zur Halogenierung von polycyclischen Küpenfarbstoffen oder deren polycyclischen Vorprodukten mit Chlor oder Brom als Halogenierungsmittel in Gegenwart eines Verdünnungsmittels bei einer Temperatur von 123 bis 200 °C.

Die Halogenierung von polycyclischen Küpenfarbstoffen in Gegenwart von Verdünnungsmitteln ist an sich bekannt.

So wird z.B. in der US-A-2 205 418 die Chlorierung von Indanthron in Nitrobenzol beschrieben. Weiterhin lehrt die US-A-1 842 694, die Halogenierung z.B. von Benzanthron oder Isodibenzanthron (Isoviolanthron) in geschmolzenem Phthalsäureanhydrid vorzunehmen.

Diese Verfahren weisen aber Nachteile auf. So bilden sich bei der Umsetzung in Nitrobenzol häufig unerwünschte Nebenprodukte. Außerdem ist Nitrobenzol ökologisch nicht völlig unbedenklich. Die Verwendung von geschmolzenem Phthalsäureanhydrid als Verdünnungsmittel hat den Nachteil, daß sich seine Rückgewinnung bei der Aufarbeitung des Reaktionsansatzes schwierig gestaltet, da dabei Phthalat gebildet wird, das durch Ansäuern und Ringschluß wiederum in das Anhydrid rückgeführt werden muß.

Aufgabe der vorliegenden Erfindung war es daher, ein neues Verfahren zur Halogenierung von polycyclischen Küpenfarbstoffen oder deren polycyclischen Vorprodukten bereitzustellen, das in Gegenwart eines Verdünnungsmittels vorgenommen wird, wobei das Verdünnungsmittel einfach handzuhaben und leicht zurückgewinnbar sein sollte. Außerdem sollten die Zielprodukte in guter Ausbeute und hoher Reinheit anfallen.

Es wurde nun gefunden, daß die Halogenierung von polycyclischen Küpenfarbstoffen oder deren polycyclischen Vorprodukten mit Chlor oder Brom als Halogenierungsmittel in Gegenwart eines Verdünnungsmittels bei einer Temperatur von 123 bis 200 °C vorteilhaft gelingt, wenn man geschmolzene Benzoesäure als Verdünnungsmittel verwendet.

Für das erfindungsgemäße Verfahren geeignete polycyclische Küpenfarbstoffe oder deren polycyclische Vorprodukte stammen z.B. aus der Klasse der Anthrachinone, Anthrachinoylamine (Anthrimide), Anthrachinoncarbazole, Anthrachinonthiazole, Anthrachinonoxazole, Anthrachinonacridone, Anthrachinonthioxanthone, Anthrachinonthioxanthene, Indanthrone, Flavanthrone, Pyranthrone, Anthanthrone, Dibenzopyrenchinone, Isodibenzopyrenchinone, Violanthrone, Isoviolanthrone, Benzanthronylpyrazolanthrone, Benzanthronylaminoanthrachinone (Benzanthronacridone), Thiabenzanthrone, Anthrapyrimidine, Pyridonanthrone, Bispyrazoloanthrone, Acedianthrone, Perylentetracarbonsäureimide oder Napththoylenbenzimidazole.

Dabei sind jeweils die Grundkörper oder die durch Amino, $C_1$-$C_4$-Alkanoylamino oder Benzoylamino ein- oder zweifach substituierten Derivate hervorzuheben.

Besondere Bedeutung kommt dabei Anthrachinon, durch Amino, $C_1$-$C_4$-Alkanoylamino oder Benzoylamino ein- oder zweifach substituiertem Anthrachinon, Indanthron, Violanthron oder Isoviolanthron zu.

Bei den polycyclischen Küpenfarbstoffen und deren polycyclischen Vorprodukten handelt es sich um bekannte Verbindungen. Sie sind z.B. in Ullmann's Encyclopedia of Industrial Chemistry, Vol. A2, Seiten 356 bis 398, 5th Ed., beschrieben.

Eine bevorzugte Verfahrensweise besteht darin, daß man Chlor als Halogenierungsmittel verwendet.

Das erfindungsgemäße Verfahren, das sowohl in kontinuierlicher als auch diskontinuierlicher Arbeitsweise vorgenommen werden kann, wird zweckmäßig bei Normaldruck oder bei leicht erhöhtem Druck (bis zu ca. 10 bar) durchgeführt. Man legt dabei feste Benzoesäure vor und schmilzt diese auf. (Der Schmelzpunkt der Benzoesäure beträgt 122,4 °C). Danach gibt man unter Rühren den zu halogenierenden polycyclischen Küpenfarbstoff oder dessen polycyclisches Vorprodukt in Substanz zu und beginnt dann bei einer Temperatur von 123 bis 200 °C, vorzugsweise 125 bis 180 °C, und insbesondere 130 bis 150 °C mit der Zugabe des Halogenierungsmittels.

Es ist aber auch möglich, direkt ein Gemisch aus Benzoesäure und dem zu halogenierenden polycyclischen Küpenfarbstoff oder dessen polycyclischem Vorprodukt vorzulegen und dann mit dem Erwärmen zu beginnen.

In manchen Fällen kann es von Vorteil sein, die Umsetzung in Gegenwart von geringen Mengen eines Katalysators, z.B. Eisen(III)chlorid, Eisenpulver oder Iod, durchzuführen.

Verwendet man Chlor als Halogenierungsmittel, so ist es empfehlenswert, den gasförmigen Chlorstrom unter die Oberfläche des Reaktionsgemisches einzuleiten. Auch bei der Verwendung von Brom als Halogenierungsmittel empfiehlt es sich, die Zugabe des Broms unter der Oberfläche des Reaktionsgemisches vorzunehmen.

Die anzuwendende Menge an Halogen ist abhängig vom Halogenierungsgrad, d.h. von der Anzahl der Halogenatome, die in den polycyclischen Küpenfarbstoff oder dessen polycyclisches Vorprodukt eingeführt werden sollen.

Pro einzuführendes Halogenatom kommen in der Regel 1 bis 4 Mol, vorzugsweise 1,5 bis 2,5 Mol, Halogenierungsmittel, jeweils bezogen auf 1 Mol an polycyclischem Küpenfarbstoff oder dessen polycyclischem Vorprodukt, zur Anwendung.

Die Menge an Benzoesäure beträgt üblicherweise das 4- bis 15fache, vorzugsweise das 7- bis 10fache, der Gewichtsmenge an polycyclischem Farbstoff oder dessen polycyclischem Vorprodukt.

Zweckmäßig verwendet man dabei trockene Benzoesäure, wenngleich ein Wassergehalt von bis zu ca. 3 Gew.-% sich nicht nachteilig auswirkt.

Es besteht auch die Möglichkeit, die polycyclischen Küpenfarbstoffe oder deren polycyclische Vorprodukte als wasserfeuchte Preßkuchen in die Benzoesäureschmelze einzubringen. In diesem Fall wird dann dem Halogenierungsschritt ein Entwässerungsschritt vorangestellt, um das Reaktionsgemisch entweder völlig oder bis zu dem obengenannten Wassergehalt zu entwässern.

Nachdem die Zufuhr des Halogenierungsmittels beendet ist, was üblicherweise 4 bis 12 Stunden in Anspruch nimmt, wird im allgemeinen noch 0 bis 3 Stunden bei der erfindungsgemäßen Temperatur nachgerührt. Danach erfolgt die Aufarbeitung.

Die Aufarbeitung kann durch Abdestillieren der Benzoesäure unter vermindertem Druck geschehen. Auch die wäßrige Aufarbeitung ist möglich. Dabei wird das Reaktionsgemisch entweder direkt mit heißem Wasser, in dem Benzoesäure in gewissem Umfang löslich ist, oder mit verdünnter Alkalilauge behandelt, um in diesem Fall die Benzoesäure in wasserlösliche Alkalibenzoate überzuführen.

Das erfindungsgemäße Verfahren liefert die Zielprodukte in guter Ausbeute und hoher Reinheit. Überraschend ist dabei, daß die als Verdünnungsmittel verwendete Benzoesäure während der Umsetzung keine Halogenierung erleidet.

Benzoesäure ist gut regenerierbar, d.h. sie kann im wesentlichen in das Verfahren zurückgeführt werden. Andererseits ist Benzoesäure jedoch auch gut abbaubar.

Die mittels des erfindungsgemäßen Verfahrens erhaltenen halogenierten polycyclischen Küpenfarbstoffe sind wertvolle Textilfarbstoffe.

Die folgenden Beispiele sollen die Erfindung näher erläutern.

Beispiel 1

(1-Amino-2,4-dichloranthrachinon)

In eine gerührte Schmelze aus 200 g Benzoesäure wurden bei 130 °C 22,3 g 1-Aminoanthrachinon eingetragen. Über einen Zeitraum von 6 Stunden wurden bei gleicher Temperatur 18,0 g Chlor unterhalb der Oberfläche des Reaktionsgemisches eingegast.

Der Reaktionsansatz wurde danach in einer Mischung aus 130 g 50 gew.-%iger Natronlauge und 3 l Wasser ausgefällt und 2 Stunden bei 70 bis 80 °C nachgerührt.

Nach Filtration und Waschen erhielt man 27 g 1-Amino-2,4-dichloranthrachinon (Wertgehalt 83%).

Beispiel 2

(2-Amino-3-bromanthrachinon)

In eine Vorlage aus 500 g geschmolzener Benzoesäure und 60 g 2-Aminoanthrachinon wurden bei 135 °C 22 g Brom gleichmäßig innerhalb von 7 Stunden unterhalb der Oberfläche des Reaktionsgemisches zugetropft.

Der Ansatz wurde danach bei 60 °C in einer Lösung aus 412 g 50 gew.-%iger Natronlauge und 3,5 l Wasser ausgefällt und 30 Minuten nachgerührt. Die Ausbeute betrug 85 g (Bromgehalt: 24%, Theorie: 26,5%).

Die HPLC-Analyse ergabe einen Wertgehalt von 78%, neben 12% Dibromanthrachinon. Die verwendete Benzoesäure konnte aus dem Filtrat durch Ansäuern mit Salzsäure zu ca. 80% zurückgewonnen werden; sie enthielt 0,003% Br.

Beispiel 3

(Dichlorindanthron)

In 800 g Benzoesäureschmelze wurden 90 g Indanthron und 1 g Eisenpulver bei 145 °C eingerührt. Innerhalb von 10 Stunden wurden insgesamt 49 g Chlor unterhalb der Oberfläche des Reaktionsgemisches eingegast.

Der Ansatz wurde dann wie in Beispiel 2 beschrieben, aufgearbeitet. Ausbeute: 93,6 g Dichlorindanthron mit einem Chlorgehalt von 14,6% (Theorie: 13,9%).

Beispiel 4

(Tetrachlorviolanthron)

10,00 kg Benzoesäure wurden bei 135 °C Innentemperatur in einem Reaktionskessel aufgeschmolzen. Unter Rühren wurden 1,25 kg Violanthron eingetragen. Über einen Zeitraum von ca. 8 Stunden gaste man unter gutem Rühren 1,10 kg Chlor bei 150 °C unterhalb der Oberfläche des Reaktionsgemisches ein.

Zur Aufarbeitung wurde die 150 °C heiße Schmelze in einen Edelstahldiscotherm gegeben. Bei einer Außentemperatur von 250 °C und einem Druck von ca. 35 mbar ließen sich innerhalb von 5 Stunden ca. 9,2 kg Benzoesäure abdestillieren, die wieder zur Chlorierung verwendet werden konnten (Chlorgehalt: 0,04%). Nach Abkühlen auf 35 °C wurde ein Destillationsrückstand von 2,3 kg erhalten, der zur Entfernung der verbliebenen Benzoesäurereste in 2000 g 5 gew.-%iger Natronlauge aufgenommen wurde. Nach Filtration und Waschen erhielt man 1,35 kg Tetrachlorviolanthron mit einem Chlorgehalt von 25,5% (Theorie: 23,9%).

Beispiel 5

(Dichlorisoviolanthron)

1,25 kg Isoviolanthron wurden, wie in Beispiel 4 beschrieben, 6 Stunden lang mit insgesamt 430 g Chlor begast. Nach Abdestillation der Benzoesäure wurde der Rückstand mit heißem Wasser von den Resten der Benzoesäure befreit. Man erhielt 1,4 kg Dichlorisoviolanthron mit einem Chlorgehalt von 15,2% (Theorie: 13,5%).

Beispiel 6

(Dibromviolanthron)

220 g Benzoesäure und 35 g Violanthron wurden auf 138 °C erhitzt. Bei dieser Temperatur wurden unter gutem Rühren innerhalb von 3 Stunden 13,4 g Brom unterhalb der Oberfläche des Reaktionsgemisches zudosiert. Nach 3 Stunden Nachrührzeit wurde, wie in Beispiel 1 beschrieben, aufgearbeitet. Man erhielt 42 g Dibromviolanthron mit einem Bromgehalt von 24,7% (Theorie: 26,0%).

Beispiel 7

(Bromisoviolanthron)

100 g Isoviolanthron wurden analog Beispiel 6 mit 21 g Brom umgesetzt. Man erhielt 103 g Bromisoviolanthron mit einem Bromgehalt von 12,8% (Theorie: 14,9%).

**Patentansprüche**

1.  Verfahren zur Halogenierung von polycyclischen Küpenfarbstoffen oder deren polycyclischen Vorprodukten mit Chlor oder Brom als Halogenierungsmittel in Gegenwart eines Verdünnungsmittels bei einer Temperatur von 123 bis 200 °C, dadurch gekennzeichnet, daß man geschmolzene Benzoesäure als Verdünnungsmittel verwendet.

2.  Verfahren nach Anspruch 1, dadurch gekennzeichnet, daß man Chlor als Halogenierungsmittel verwendet.

3.  Verfahren nach Anspruch 1, dadurch gekennzeichnet, daß man die Halogenierung bei einer Temperatur von 125 bis 180 °C vornimmt.